# EUROPÄISCHE PATENTANMELDUNG

(11) **EP 0 993 106 A2**
(43) Veröffentlichungstag der Anmeldung: **12.04.2000**
(21) Anmeldenummer: 99810728.8
(22) Anmeldetag: 12.08.1999
(51) Int. Cl.: H02M 7/48

(54) **Stromrichterschaltung**

(30) Priorität: 05.10.1998 DE 19845715
(71) Anmelder: ABB Daimler-Benz Transportation (Technology) GmbH, 13627 Berlin (DE)
(72) Erfinder: Hilpert, Gerald, 79787 Lauchringen (DE); Umbricht, Stefan, 5417 Untersiggenthal (CH); Salama, Samir, Dr., 13591 Berlin (DE)
(74) Vertreter: Kaiser, Helmut, Dr.

(57) **Zusammenfassung**

Eine Stromrichterschaltung (10) umfasst einen Zwischen kreis (11), einen an den Zwischenkreis (11) angeschlossenen, ausgangsseitigen Stromrichter, insbesondere Motorstromrichter (13), welcher eine Mehrzahl von Leistungshalbleiterschaltern (T3) umfasst und eine an seinem Eingang anliegende Gleichspannung in eine Wechselspannung umwandelt, einen zwischen dem Zwischenkreis (11) und dem ausgangsseitigen Stromrichter (13) angeordneten ersten Resonanzkreis (12) zur Schaltentlastung der Leistungshalbleiterschalter (T3) des ausgangsseitigen Stromrichters (13), sowie Mittel (16, 17; 22, 23) zum Einspeisen der Gleichspannung für den ausgangsseitigen Stromrichter (13).

Bei einer solchen Stromrichterschaltung wird ein schaltentlasteter Betrieb an einem Wechselstromnetz möglich, wenn die Einspeisungsmittel einen Netzstromrichter (22) mit einer Mehrzahl von Leistungshalbleiterschaltern (T4) umfassen, welcher über Verbindungsmittel (16, 17) an ein Wechselstromnetz anschliessbar ist, und am Ausgang des Netzstromrichters (22) ein zweiter Resonanzkreis (12') zur Schaltentlastung der Leistungshalbleiterschalter (T4) des Netzstromrichters (22) angeordnet ist.

## Beschreibung

### TECHNISCHES GEBIET

Die vorliegende Erfindung bezieht sich auf das Gebiet der Leistungselektronik. Sie betrifft eine Stromrichterschaltung, umfassend einen Zwischenkreis, einen an den Zwischenkreis angeschlossenen, ausgangsseitigen Stromrichter, insbesondere Motorstromrichter, welcher eine Mehrzahl von Leistungshalbleiterschaltern umfasst und eine an seinem Eingang anliegende Gleichspannung in eine insbesondere 3-phasige Wechselspannung umwandelt, einen zwischen dem Zwischenkreis und dem ausgangsseitigen Stromrichter angeordneten ersten Resonanzkreis zur Schaltentlastung der Leistungshalbleiterschalter des ausgangsseitigen Stromrichters, sowie Mittel zum Einspeisen der Gleichspannung für den ausgangsseitigen Stromrichter.

Eine solche Stromrichterschaltung ist z.B. aus der Druckschrift DE-C1-196 36 248 bekannt.

### STAND DER TECHNIK

In der eingangs genannten Druckschrift ist ein Verfahren bzw. eine Schaltungsanordnung angegeben worden, mit denen die IGBT-Leistungshalbleiterschalter eines an eine Gleichspannungsquelle, insbesondere mit einem Zwischenkreis, angeschlossenen Wechselrichters beim Schalten entlastet werden können. Hierzu wird zwischen der Gleichspannungsquelle und dem Eingang des Wechselrichters eine steuerbare Resonanzschaltung angeordnet, die eine in einer der beiden Verbindungsleitungen liegende Einschalt-Entlastungsdrosselspule und einen mit dieser Einschalt-Entlastungsdrosselspule über einen Halbleiterschalter mit antiparalleler Diode verbindbaren Abschaltentlastungskondensator umfasst.

Durch die angegebene Entlastungsschaltung wird die Schaltverlustleistung der Wechselrichterschalter beim Einschalten erheblich reduziert. Auf die Art der Gleichspannungsquelle wird dabei jedoch nicht eingegangen. Insbesondere wird nicht auf die Schaltverluste Bezug genommen, die entstehen, wenn die Gleichspannungsquelle als mit Leistungshalbleiterschaltern aufgebauter Netzstromrichter ausgebildet ist.

### DARSTELLUNG DER ERFINDUNG

Es ist daher Aufgabe der Erfindung, eine Stromrichterschaltung anzugeben, welche sich für den Fall des Betriebes der Schaltung an einem Wechselstromnetz eine entsprechende Reduzierung der Schaltverluste auf der Netzseite ermöglicht.

Die Aufgabe wird bei einer Stromrichterschaltung der eingangs genannten Art dadurch gelöst, dass die Einspeisungsmittel einen Netzstromrichter mit einer Mehrzahl von Leistungshalbleiterschaltern umfassen, welcher über Verbindungsmittel an ein Wechselstromnetz anschliessbar ist, und dass am Ausgang des Netzstromrichters ein zweiter Resonanzkreis zur Schaltentlastung der Leistungshalbleiterschalter des Netzstromrichters angeordnet ist. Der Kern der Erfindung besteht darin, dass auch dem Netzstromrichter ein schaltentlastender Resonanzkreis zugeordnet wird.

Ist gemäss einer ersten bevorzugten Ausführungsform der Erfindung der Zwischenkreis zwischen dem Ausgang des Netzstromrichters und dem Eingang des ausgangsseitigen Stromrichters angeordnet, wird der zweite Resonanzkreis zwischen dem Ausgang des Netzstromrichters und dem Zwischenkreis angeordnet. In diesem Fall sind zwei separate und eigenständig angesteuerte Resonanzkreise vorhanden.

Ein anderer Fall ergibt sich, wenn gemäss einer zweiten bevorzugten Ausführungsform der Erfindung der ausgangsseitige Stromrichter über zwei Verbindungsleitungen an den Zwischenkreis angeschlossen ist, der erste Resonanzkreis eine in eine der Verbindungsleitungen eingefügte Resonanzkreisdrossel umfasst, und der Netzstromrichter mit seinem Ausgang zwischen dem ersten Resonanzkreis und dem ausgangsseitigen Stromrichter an die Verbindungsleitungen angeschlossen ist. In diesem Fall wird der erste Resonanzkreis zugleich als zweiter Resonanzkreis verwendet, so dass für beide Entlastungsfunktionen nur ein Resonanzkreis vorhanden ist. Dies hat den besonderen Vorteil, dass der (vergleichsweise hohe) Gleichstromanteil an der Resonanzkreisdrossel vorbei direkt von dem Ausgang des Netzstromrichters zum Eingang des ausgangsseitigen Stromrichters fliesst. Durch die Resonanzkreisdrossel fliessen dagegen nur noch die Wechselstromanteile aus den Kondensatoren des Zwischenkreises. Entsprechend günstig kann die Resonanzkreisdrossel dimensioniert werden. Da bei dieser Ausführungsform der eine Resonanzkreis sowohl für die Entlastung der Schaltelemente im Netzstromrichter als auch für die Schaltelemente im ausgangsseitigen Stromrichter (Wechselrichter) eingesetzt wird, lässt sich auf diese Weise mit einem minimalen Aufwand an Schaltungskomponenten, d.h., mit nur einem Resonanzkreis, - bei allerdings etwas erhöhtem Steuerungsaufwand - eine wirksame Entlastung für beide Stromrichter durchführen.

Der erste und/oder zweite Resonanzkreis umfassen vorzugsweise einen Resonanzkreiskondensator, welcher über einen in Serie liegenden ersten Leistungshalbleiterschalter mit antiparalleler Diode mit der wenigstens einen Resonanzkreisdrossel verbindbar ist, wobei entweder die Serieschaltung aus Resonanzkreiskondensator und erstem Leistungshalbleiterschalter zu der wenigstens einen Resonanzkreisdrossel parallelgeschaltet ist, oder die Serieschaltung aus Resonanzkreiskondensator und erstem Leistungshalbleiterschalter zwischen den beiden Verbindungsleitungen angeordnet ist. Bei der ersten der beiden Alternativen kann dabei der Resonanzkreiskondensator kleiner gewählt werden als bei der anderen Alternative.

Eine weitere bevorzugte Ausführungsform der erfindungsgemässen Schaltung, die sich für eine Entlastung sowohl beim Ausschalten als auch beim Einschalten eignet, ist dadurch gekennzeichnet, dass dem Resonanzkreiskondensator ein über einen zweiten Leistungshalbleiterschalter mit antiparalleler Diode zuschaltbarer Clampkondensator parallelgeschaltet ist.

Besonders gering sind die Rückwirkungen des Resonanzkreises auf das Netz aus Symmetriegründen, wenn gemäss einer weiteren bevorzugten Ausführungsform der Schaltung nach der Erfindung der erste und/oder zweite Resonanzkreis zwei gleich grosse Resonanzdrosseln umfasst, die jeweils in einer der beiden Verbindungsleitungen angeordnet sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Prinzipschaltbild eines ersten bevorzugten Ausführungsbeispiels einer Stromrichterschaltung nach der Erfindung für ein Schienenfahrzeug, bei welchem der Zwischenkreis zwischen Netzstromrichter und dem Wechselrichter angeordnet ist;
- Fig. 2: das Prinzipschaltbild eines zweiten bevorzugten Ausführungsbeispiels einer Stromrichterschaltung nach der Erfindung, bei welchem Netzstromrichter und Wechselrichter direkt miteinander verbunden und gemeinsam über einen einzigen Resonanzkreis an den Zwischenkreis angeschlossen sind; und
- Fig. 3-9: verschiedene alternative Ausführungsbeispiele für die Resonanzkreise aus Fig. 1 und 2, wobei

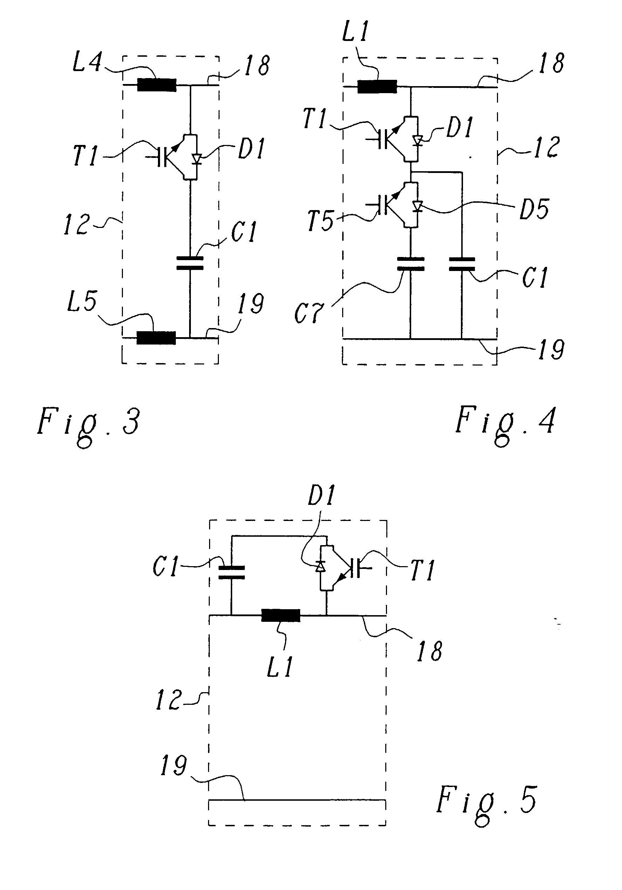

- Fig. 3: einen Resonanzkreis mit einem symmetrisch angeordneten Paar von Resonanzkreisdrosseln zeigt;
- Fig. 4: einen Resonanzkreis mit zusätzlicher Ausschaltentlastung zeigt;
- Fig. 5: einen Resonanzkreis mit alternativer Entlastungsschaltung zeigt; und

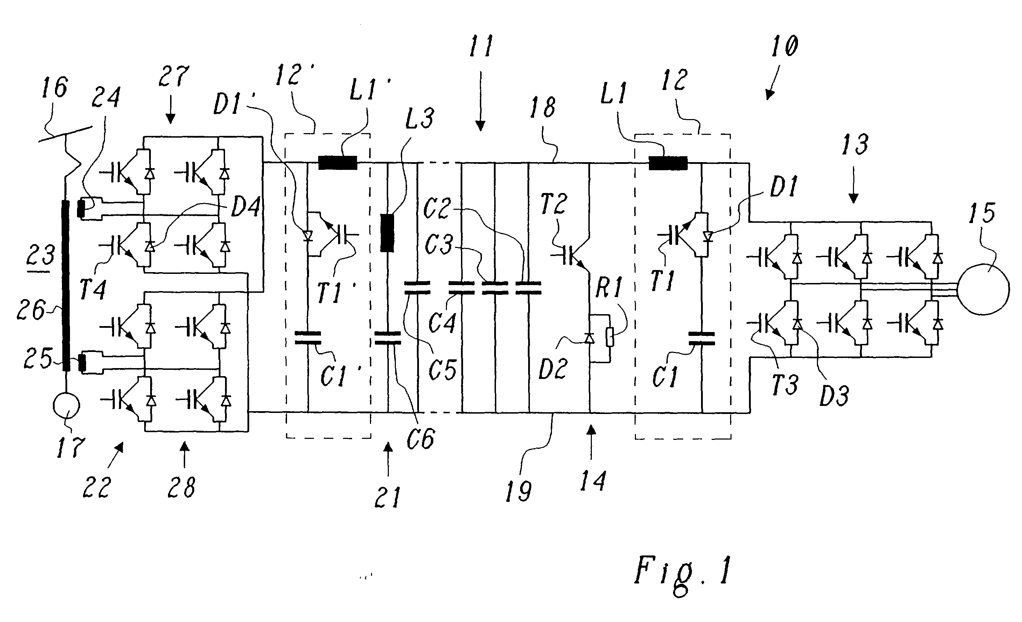

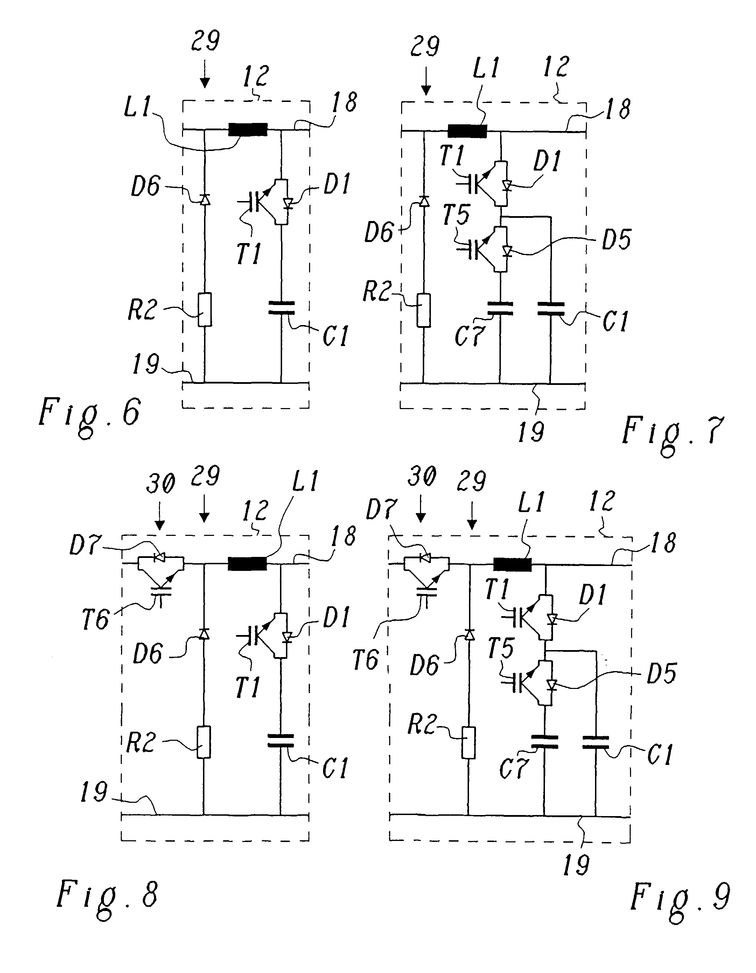

- Fig. 6-9: die beiden Ausführungsbeispiele des Resonanzkreises nach Fig. 1 und Fig. 4 mit zusätzlicher Umschwingentlastungsschaltung (Fig. 6 und 7) und mit zusätzlichem Kurzschlussstromabschalter (Fig. 8 und 9) zeigt.

### WEGE ZUR AUSFÜHRUNG DER ERFINDUNG

In Fig. 1 ist das Prinzipschaltbild eines ersten bevorzugten Ausführungsbeispiels einer Stromrichterschaltung nach der Erfindung für ein an einem Wechselstromnetz betriebenes Schienenfahrzeug dargestellt. Die Stromrichterschaltung 10 umfasst als ausgangsseitigen Stromrichter (Wechselrichter) einen Motorstromrichter 13, der als Brückenschaltung aus einer Mehrzahl von IGBTs T3 mit entsprechender antiparalleler Diode D3 aufgebaut ist. Der Motorstromrichter 13 erzeugt aus der am Eingang anliegenden Gleichspannung durch entsprechendes Ein- und Ausschalten der IGBTs T3 eine 3-phasige Wechselspannung, die zur Speisung eines Motors 15 dient, der beispielsweise als Fahrmotor arbeitet. Der Gleichspannungseingang des Motorstromrichters 13 ist über zwei Verbindungsleitungen 18, 19 mit einem Zwischenkreis 11 verbunden, der im gezeigten Beispiel eine Mehrzahl von parallelgeschalteten Zwischenkreiskondensatoren C2,..,C5 aufweist. Der Zwischenkreis 11 dient im wesentlichen zur Glättung von eventuellen Spannungsschwankungen, die in der Gleichspannung vorhanden sein können, mit welcher der Motorstromrichter 13 versorgt wird.

Zwischen dem Zwischenkreis 11 und dem Eingang des Motorstromrichters 13 ist ein (in der Fig. 1 mit einem gestrichelten Kasten umrahmter) erster Resonanzkreis 12 angeordnet, der in der dargestellten Konfiguration zur Verringerung der Einschaltverluste der IGBTs T3 im Motorstromrichter 13 dient (sog. "soft-switching"). Der erste Resonanzkreis 12 besteht in diesem Fall aus einer in der einen Verbindungsleitung 18 angeordneten Resonanzkreisdrossel L1 und einem zwischen den Verbindungsleitungen liegenden Resonanzkreiskondensator C1, der über einen IGBT T1 mit antiparalleler Diode D1 mit der Resonanzkreisdrossel L1 zu einem Schwingkreis zusammengeschaltet werden kann. Der erste Resonanzkreis 12 in dieser Form ist aus der eingangs genannten Druckschrift DE-C1-196 36 248 bekannt. Zur Erklärung seiner Ansteuerung und Funktion sei daher der Einfachheit halber auf diese Schrift verwiesen.

Als Gleichspannungsquelle wirkt in Fig. 1 ein links vom Zwischenkreis 11 angeordneter Netzstromrichter 22. Der Netzstromrichter 22 umfasst (ohne Beschränkung der Allgemeinheit) zwei parallele Brückenschaltungen 27, 28 mit jeweils einer Mehrzahl von IGBTs T4 mit antiparalleler Diode D4. Die Brückenschaltungen 27, 28 sind mit ihren Wechselspannungseingängen jeweils an eine Sekundärwicklung 24, 25 eines Netztransformators 23 angeschlossen, dessen Primärwicklung 26 über ein schienengebundenes Rad 17 und einen Stromabnehmer 16 mit dem Wechselsstromnetz verbunden wird. Selbstverständlich sind zur Bereitstellung der Gleichspannung auch andere Stromrichterkonfigurationen denkbar.

Zur Schaltentlastung der IGBTs T4 im Netzstromrichter 22 ist zwischen dem Ausgang des Netzstromrichters 22 und dem Zwischenkreis 11 ein zweiter Resonanzkreis 12' vorgesehen, der spiegelbildlich zum ersten Resonanzkreis 12 aufgebaut ist und gleichfalls eine Resonanzkreisdrossel L1', einen Resonanzkreiskondensator C1', und einen als Schalter wirkenden IGBT T1' mit antiparalleler Diode D1' aufweist. Die beiden Resonanzkreise 12 und 12' werden nach Massgabe der Ansteuerung des zugehörigen Stromrichters 13 bzw. 22 angesteuert, so dass sich für beide Stromrichter der Stromrichterschaltung 10 eine wirksame Schaltentlastung ergibt. Selbstverständlich können bei der Schaltungskonfiguration der Fig. 1 ohne Einschränkungen zusätzliche Schaltungsmassnahmen zur Erweiterung der Funktion der Stromrichterschaltung 10 vorgesehen werden. So ist es beispielsweise denkbar, zwischen dem Zwischenkreis 11 und dem ersten Resonanzkreis 12 in an sich bekannter Weise einen Bremssteller 14 anzuordnen, der eine Serieschaltung aus einem IGBT T2 und einer Parallelschaltung aus Diode D2 und Widerstand R1 umfasst. Eine weitere Schaltungsmassnahme ist ein aus einer Saugkreisdrossel L3 und einem Saugkreiskondensator C6 bestehender Saugkreis 21, der entweder (wie in Fig. 1 gezeigt) zwischen dem zweiten Resonanzkreis 12' und dem Zwischenkreis 11, oder zwischen dem zweiten Resonanzkreis 12' und dem Netzstromrichter 22 angeordnet werden kann.

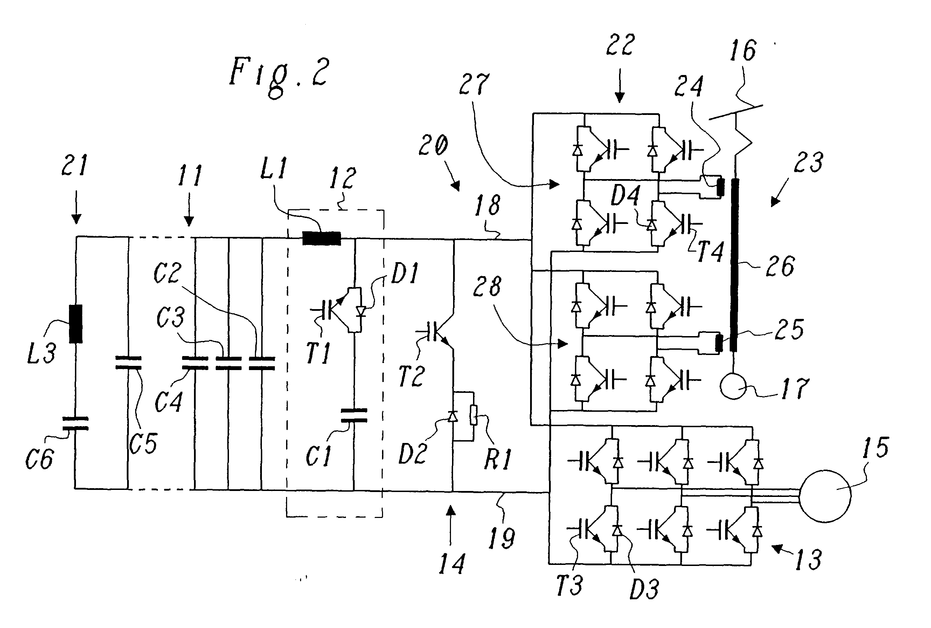

Im Stand der Technik, wie er durch die DE-C1-196 36 248 bekannt geworden ist, und auch im Ausführungsbeispiel der Fig. 1 ist die Gleichspannungsquelle (bzw. der Netzstromrichter), die zur Versorgung des ausgangsseitigen Stromrichters mit Gleichspannung dient, links vom ersten Resonanzkreis angeordnet, d.h., der erste Resonanzkreis befindet sich zwischen der Gleichspannungsquelle und dem Stromrichter. Dies hat den Nachteil, dass der gesamte Strom zum Stromrichter durch die Resonanzkreisdrossel fliessen muss. In der Stromrichterschaltung 10 gemäss Fig. 2 ist die Situation bezüglich der Gleichspannungsquelle grundsätzlich anders. Die Gleichspannungsquelle, die hier wiederum durch den Netzstromrichter 22 gebildet wird, wird hier mit den Verbindungsleitungen 18, 19 rechts vom ersten Resonanzkreis 12 verbunden, d.h. die Gleichspannungsquelle liegt zwischen dem ersten Resonanzkreis 12 und dem Motorstromrichter 13. Die Resonanzkreisdrossel L1 führt so nur den (vergleichsweise kleinen) Strom, der auch in den Zwischenkreiskondensatoren C2,..,C5 fliesst. Der Gleichstromanteil des Zwischenkreisstromes fliesst dagegen an der Resonanzkreisdrossel L1 vorbei direkt zum Motorstromrichter 13. Entsprechend kann die Resonanzkreisdrossel L1 leistungsmässig kleiner ausgelegt werden. Dasselbe gilt für die Verbindungen vom ersten Resonanzkreis 12 zum Zwischenkreis 11. Zusätzlich kann optional am Zwischenkreis 11 (wie in Fig. 2 gezeigt) oder zwischen den Verbindungsleitungen 18, 19 wiederum ein Saugkreis 21 aus einer Saugkreisdrossel L3 und einem Saugkreiskondensator C6 angeschlossen sein.

Ein weiterer, besonderer Vorteil der Stromrichterschaltung aus Fig. 2 lässt sich wie folgt beschreiben: Bei entsprechender Ansteuerung des ersten Resonanzkreises 12 kann der erste Resonanzkreis 12 nicht nur zur Herabsetzung der Einschaltverluste im Motorstromrichter 13 verwendet werden, sondern auch zur Herabsetzung der Einschaltverluste im Netzstromrichter 22. Auf diese Weise kann - bei etwas erhöhtem Ansteuerungsaufwand - auf den zweiten Resonanzkreis 12' aus Fig. 1 verzichtet werden. Der erste Resonanzkreis 12 übernimmt die Funktion des zweiten Resonanzkreises 12', so dass die entsprechenden Bauteile für den zweiten Resonanzkreis eingespart werden können.

Der erste Resonanzkreis 12 ist in den Ausführungsbeispielen der Fig. 1 und 2 in einer einfachen Grundkonfiguration dargestellt. Andere im Rahmen der Erfindung mögliche Konfigurationen des ersten Resonanzkreises 12 ergeben sich aus den Fig. 3 bis 9. Die entsprechend anderen Konfigurationen für den zweiten Resonanzkreis 12' ergeben sich aus den Fig. 3 bis 9 durch eine spiegelbildliche Anordnung der Resonanzkreisdrosseln:

Beim Resonanzkreis 12 der Fig. 3 ist die (unsymmetrische) Resonanzkreisdrossel L1 in der Verbindungsleitung 18 durch zwei (symmetrische) Resonanzkreisdrosseln L4 und L5 ersetzt, die jeweils in einer Verbindungsleitung 18 bzw. 19 angeordnet sind, und im wesentlichen gleich sind. Durch diese Art der Symmetrierung können die unerwünschten Netzrückwirkungen der Stromrichterschaltung erheblich verringert werden, was einen wesentlichen Vorteil darstellt.

Beim Resonanzkreis 12 der Fig. 4 ist parallel zum Resonanzkreiskondensator C1 eine zusätzliche Serieschaltung aus einem Clampkondensator C7 und einem IGBT T5 mit antiparalleler Diode D5 vorgesehen. Mit dieser Erweiterung können neben den Einschaltverlusten auch die Ausschaltverluste begrenzt werden. Die Funktionsweise dieser an sich bekannten Schaltung ist beispielsweise in der Druckschrift DE-C2-42 33 573 beschrieben.

Bei der alternativen Konfiguration der Fig. 5 ist die Serieschaltung aus Resonanzkreiskondensator C1 und IGBT T1 (mit Diode D1) parallel zur Resonanzkreisdrossel L1 angeordnet. Die Funktionsweise dieser an sich bekannten Schaltung ist in der DE-C1-196 36 248 beschrieben.

Bei den Konfigurationen des Resonanzkreises 12 aus Fig. 6 und 7 ist der aus Fig. 1 bzw. Fig. 4 bekannten Basiskonfiguration jeweils eine Umschwingentlastungsschaltung 29 zugefügt, die aus einer Diode D6 und einem Widerstand R2 besteht. Diese Umschwingentlastungsschaltung 29 übernimmt nach einer Durchzündung den Stossstrom, sobald die Spannung an den Zwischenkreiskondensatoren C2,..,C5 beginnt, negativ zu werden. Mit Hilfe dieser Entlastungsschaltung wird ein wesentlicher Teil der im System gespeicherten Energie nicht in einer Fehlerstelle, sondern im dafür dimensionierten Widerstand R2 in Wärme umgesetzt.

Bei den Konfigurationen des Resonanzkreises 12 aus Fig. 8 und 9 ist den aus Fig. 6 bzw. Fig. 7 bekannten Konfigurationen zusätzlich ein Kurzschlussstromabschalter 30 (IGBT T6 mit antiparalleler Diode D7) zugefügt. Der Kurzschlussstromabschalter 30 schaltet nach einer Durchzündung den Kurzschlussstrom aus den Zwischenkreiskondensatoren C2,..,C5 ab. Durch die Resonanzkreisdrossel L1 wird das di/dt im Kurzschlussfall reduziert und damit der Diodenabriss, welcher bei vorgefluteter Diode auftritt, wesentlich entschärft. Bei den Konfigurationen gemäss Fig. 8 und 9 würde der DC-Anteil des Stromes allerdings über den Kurzschlussstromabschalter 30 fliessen. Dies kann vermieden werden, wenn der Kurschlussstromabschalter 30 (anders als in Fig. 8 und 9 dargestellt) in Serie mit den Zwischenkreiskondensatoren C2,..,C5 geschaltet wird.

Insgesamt ergibt sich mit der Erfindung eine Stromrichterschaltung, die sich durch folgende Merkmale und Vorteile auszeichnet:
- Mit Hilfe der Resonanzkreise werden die Schaltverlustleistungen der Halbleiterschalter reduziert ("soft-switching"). Damit sind die Stromrichter in der Lage, eine höhere maximale Leistung zu übertragen als im hart geschalteten Betrieb.
- Der Zwischenkreis muss in den Schaltungsanordnungen gemäss Fig. 1 und 2 nicht mehr derart niederinduktiv aufgebaut werden wie im Falle der bisher üblichen hart geschalteten Stromrichtertopologien; in Fall von Fig. 2 kann auch ein Resonanzkreis eingespart werden.
- Der Stossstrom, welcher sich bei einer Durchzündung (Fehlerfall) beider Halbleiterelemente eines Zweigpaares im Motorstromrichter bzw. im Netzstromrichter ergibt, wird durch die Resonanzkreisdrosseln wesentlich bedämpft. Die bei den hart geschalteten Stromrichtertopologien vorgesehene ohmsche Bedämpfung des Stossstromes (Kurzschlussstrombegrenzer) kann damit eventuell entfallen oder zumindest reduziert werden.

### BEZUGSZEICHENLISTE

- 10,20: Stromrichterschaltung
- 11: Zwischenkreis
- 12,12': Resonanzkreis
- 13: Motorstromrichter
- 14: Bremssteller
- 15: Motor
- 16: Stromabnehmer
- 17: Rad
- 18,19: Verbindungsleitung
- 21: Saugkreis
- 22: Netzstromrichter
- 23: Netztransformator
- 24,25: Sekundärwicklung
- 26: Primärwicklung
- 27,28: Brückenschaltung
- 29: Umschwingentlastungsschaltung
- 30: Kurzschlussstromabschalter
- C1,C1': Resonanzkreiskondensator
- C2,..,C5: Zwischenkreiskondensator
- C6: Saugkreiskondensator
- C7: Clampkondensator
- D1,D1',..,D7: Diode
- L1,L1',L4,L5: Resonanzkreisdrossel
- L2: Eingangsfilterdrossel
- L3: Saugkreisdrossel
- R1,R2: Widerstand
- T1,T1',..,T6: IGBT (Leistungshalbleiterschalter)

## Patentansprüche

1. Stromrichterschaltung (10, 20), umfassend einen Zwischenkreis (11), einen an den Zwischenkreis (11) angeschlossenen, ausgangsseitigen Stromrichter, insbesondere Motorstromrichter (13), welcher eine Mehrzahl von Leistungshalbleiterschaltern (T3) umfasst und eine an seinem Eingang anliegende Gleichspannung in eine insbesondere 3-phasige Wechselspannung umwandelt, einen zwischen dem Zwischenkreis (11) und dem ausgangsseitigen Stromrichter (13) angeordneten ersten Resonanzkreis (12) zur Schaltentlastung der Leistungshalbleiterschalter (T3) des ausgangsseitigen Stromrichters (13), sowie Mittel (16, 17; 22, 23) zum Einspeisen der Gleichspannung für den ausgangsseitigen Stromrichter (13), dadurch gekennzeichnet, dass die Einspeisungsmittel einen Netzstromrichter (22) mit einer Mehrzahl von Leistungshalbleiterschaltern (T4) umfassen, welcher über Verbindungsmittel (16, 17) an ein Wechselstromnetz anschliessbar ist, und dass am Ausgang des Netzstromrichters (22) ein zweiter Resonanzkreis (12, 12') zur Schaltentlastung der Leistungshalbleiterschalter (T4) des Netzstromrichters (22) angeordnet ist.

2. Stromrichterschaltung nach Anspruch 1, dadurch gekennzeichnet, dass der Zwischenkreis (11) zwischen dem Ausgang des Netzstromrichters (22) und dem Eingang des ausgangsseitigen Stromrichters (13) angeordnet ist, und dass der zweite Resonanzkreis (12') zwischen dem Ausgang des Netzstromrichters (22) und dem Zwischenkreis (11) angeordnet ist.

3. Stromrichterschaltung nach Anspruch 1, dadurch gekennzeichnet, dass der ausgangsseitige Stromrichter (13) über zwei Verbindungsleitungen (18, 19) an den Zwischenkreis (11) angeschlossen ist, dass der erste Resonanzkreis (12) eine in eine der Verbindungsleitungen (18, 19) eingefügte Resonanzkreisdrossel (L1) umfasst, dass der Netzstromrichter (22) mit seinem Ausgang zwischen dem ersten Resonanzkreis (12) und dem ausgangsseitigen Stromrichter (13) an die Verbindungsleitungen (18, 19) angeschlossen ist, und dass der erste Resonanzkreis (12) zugleich als zweiter Resonanzkreis verwendet wird.

4. Stromrichterschaltung nach einem der Ansprüche 1 bis 3, dadurch gekennzeichnet, dass der ausgangsseitige Stromrichter ein Motorstromrichter (13) ist, welcher den Motor (15) eines Schienenfahrzeugs versorgt, und dass die Verbindungsmittel ein auf der Schiene laufendes Rad (17) und einen Stromabnehmer (16) für eine Oberleitung umfassen.

5. Stromrichterschaltung nach 4, dadurch gekennzeichnet, dass zwischen dem Zwischenkreis (11) und dem Motorstromrichter (13) ein Bremssteller (14) angeordnet ist.

6. Stromrichterschaltung nach einem der Ansprüche 1 bis 5, dadurch gekennzeichnet, dass der erste und/oder zweite Resonanzkreis (12, 12') wenigstens eine Resonanzkreisdrossel (L1, L1'; L4, L5) sowie einen Resonanzkreiskondensator (C1, C1') umfassen, welcher über einen in Serie liegenden ersten Leistungshalbleiterschalter (T1, T1') mit antiparalleler Diode (D1, D1') mit der wenigstens einen Resonanzkreisdrossel (L1; L4, L5) verbindbar ist.

7. Stromrichterschaltung nach Anspruch 6, dadurch gekennzeichnet, dass die Serieschaltung aus Resonanzkreiskondensator (C1) und erstem Leistungshalbleiterschalter (T1) zu der wenigstens einen Resonanzkreisdrossel (L1) parallelgeschaltet ist.

8. Stromrichterschaltung nach Anspruch 6, dadurch gekennzeichnet, dass die Serieschaltung aus Resonanzkreiskondensator (C1, C1') und erstem Leistungshalbleiterschalter (T1, T1') zwischen den beiden Verbindungsleitungen (18, 19) angeordnet ist.

9. Stromrichterschaltung nach Anspruch 8, dadurch gekennzeichnet, dass dem Resonanzkreiskondensator (C1) ein über einen zweiten Leistungshalbleiterschalter (T5) mit antiparalleler Diode (D5) zuschaltbarer Clampkondensator (C7) parallelgeschaltet ist.

10. Stromrichterschaltung nach einem der Ansprüche 1 bis 9, dadurch gekennzeichnet, dass der erste und/oder zweite Resonanzkreis (12, 12') zwei gleich grosse Resonanzdrosseln (L4, L5) umfassen, die jeweils in einer der beiden Verbindungsleitungen (18, 19) angeordnet sind.

11. Stromrichterschaltung nach einem der Ansprüche 1 bis 10, dadurch gekennzeichnet, dass der erste und/oder zweite Resonanzkreis (12, 12') eine Umschwingentlastungsschaltung (29) enthalten, und dass die Umschwingentlastungsschaltung (29) eine zwischen den Verbindungsleitungen (18, 19) angeordnete Serieschaltung aus einer Diode (D6) und einem Widerstand (R2) umfasst.

12. Stromrichterschaltung nach Anspruch 11, dadurch gekennzeichnet, dass der erste und/oder zweite Resonanzkreis (12) einen Kurzschlussstromabschalter (30) enthält, und dass der Kurzschlussstromabschalter (30) einen in einer der Verbindungsleitungen (18, 19) zum Zwischenkreis (11) hin angeordneten dritten Leistungshalbleiterschalter (T6) mit antiparalleler Diode (D7) umfasst.
